# EUROPÄISCHE PATENTANMELDUNG

(11) **EP 1 063 109 A1**
(43) Veröffentlichungstag der Anmeldung: **27.12.2000**
(21) Anmeldenummer: 00110143.5
(22) Anmeldetag: 11.05.2000
(51) Int. Cl.: B60H 1/00

(54) **Bedieneinheit zur Heiz/Lüftungssteuerung**

(30) Priorität: 25.06.1999 DE 19929294
(71) Anmelder: Volkswagen Aktiengesellschaft, 38436 Wolfsburg (DE)
(72) Erfinder: Bachorski, Tomasz, 59077 Hamm (DE)

(57) **Zusammenfassung**

Bedieneinheit zur Heiz/Lüftungsregelung in einem Kraftfahrzeug, mit einem ersten Einstellelement in einer Bedienebene und einem zweiten Bedienelement das als Schiebefunktion des ersten Einstellelementes in der Bedienebene ausgebildet ist. Die Bedieneinheit ermöglicht eine rotatorische Verstellung des Bedienknopfes 5 um seinen Mittelpunkt. Eine weitere Bedienmöglichkeit ist die Verschiebung des Bedienknopfes 5 entlang einer Schiebebahn 8.

## Beschreibung

Die Erfindung bezieht sich auf eine Bedieneinheit zur Heiz/Lüftungssteuerung in einem Kraftfahrzeug.

Bedieneinheiten zur Heiz/Lüftungssteuerung für ein Kraftfahrzeug sind meist in einem Armaturenbrett eingesetzt, und sollen ergonomisch für den Fahrer angeordnet sein. Üblicherweise befinden sich in dem Armaturenbrett eine Vielzahl von Messanzeigen und Bedieneinheiten, allein zur Heiz/Lüftungssteuerung ist z. B. ein Stufenwahlschalter für den Ventilator, ein Wahischieber für die Temperatur und ein Wahlschieber für den Luftstromauslass vorhanden.

Bekannt sind Bedieneinheiten zur Heiz/ Lüftungsregelung in einem Kraftfahrzeug die ein Übertragungselement (Bowdenzug) oder mehrere Übertragungselemente mit einer voneinander abhängigen Bewegung steuern. Jedem der Bedieneinheiten ist eine Funktion aus der Gruppe Temperatur, Luftstromauslasswahl und Luftstrommenge zugeordnet.

Aufgabe der Erfindung ist eine Bedieneinheit zur Steuerung der Heiz/Lüftungsanlage, die das Armaturenbrett übersichtlicher werden läßt.

Erfindungsgemäß wird dies bei einer Bedieneinheit zur Heiz/Lüftungssteuerung in einem Kraftfahrzeug durch einen für die Heiz/Lüftungsregelanlage neuen Schaltmechanismus/ Schaltelektronik gelöst. Bei dieser Bedieneinheit ist ein erstes Einstellelement in einer Bedienebene als Schiebefunktion eines anderen Einstellelementes in der Bedienebene ausgebildet. Besonders günstige Ausgestaltungen sind in den Unteransprüchen wiedergegeben.

Die erfindungsgemäße Bedieneinheit weist verschiedene Vorteile auf. Aufgrund des neuen Bedienelementes reduziert sich die Anzahl der Bedienelemente am Armaturenbrett. Durch die Reduktion der Anzahl der Bedienelemente ist das Armaturenbrett übersichtlicher. Ein übersichtlicheres Armaturenbrett ermöglicht ein schnelles zurechtfinden in den Schaltfunktionen, wodurch in kritischen Situationen die Aufmerksamkeit des Fahrers nicht abgelenkt wird. Durch das neue Bedienelement steht dem Fahrer ein verbessertes Bedienelement zur Verfügung, durch das sich der Fahrer, wegen der schnelleren Orientierung intensiver um den Straßenverkehr widmen kann.

Ein weiterer Vorteil der Erfindung ist die verbesserte designerische Gestaltbarkeit, die ein gefälligeres Armaturenbrett ermöglicht.

Im folgenden wird die Erfindung anhand eines Beispiels und mit Bezug auf die beiliegenden Zeichnungen näher erläutert. Es zeigen
- Fig. 1: ein erstes Beispiel des Bedienelementes zur Heiz/Lüftungssteuerung für ein Kraftfahrzeug in der Frontansicht in Schaltstufe 1;
- Fig. 2: das Beispiel aus Fig. 1 in der Schaltstufe 2;
- Fig. 3: das Beispiel aus Fig. 1 in der Schaltstufe 3;
- Fig. 4: ein zweites Beispiel des Bedienelementes zur Heiz/Lüftungssteuerung für ein Kraftfahrzeug in der Frontansicht mit stufenloser Schiebefunktion;
- Fig. 5: das Beispiel aus Fig. 4 in der linken Anschlag Position und;
- Fig. 6: das Beispiel aus Fig. 4 in einer Position zwischen den Anschlagpositionen.

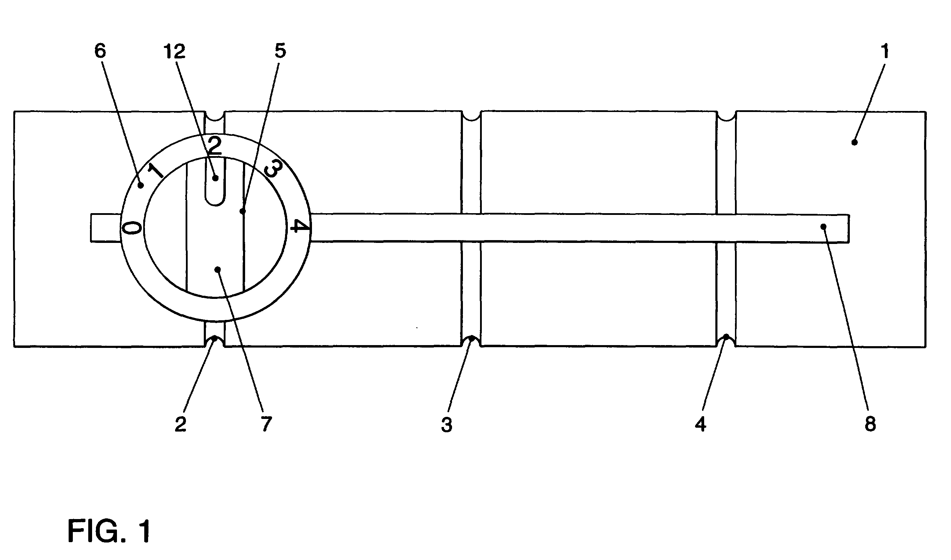

Figur 1 zeigt ein Beispiel einer Bedieneinheit zur Heiz/Lüftungssteuerung in einem Kraftfahrzeug. Die Bedieneinheit ermöglicht eine rotatorische Verstellung des Bedienknopfes 5 um seinen Mittelpunkt. Eine weitere Bedienmöglichkeit ist die Verschiebung des Bedienknopfes 5 entlang einer Schiebebahn 8. In der vorliegenden Fig. 1 ist der Bedienknopf auf der Verschiebebahn 8 in der Anfangsstellung zu sehen. Hier, in der Anfangsstellung, ist der Bedienknopf von der ersten Schaltstufe 2, zur Schaltstufe zweiten 3 bis hin zur dritten Schaltstufe 4 verschiebbar. Die Frontplatte 1 dient hierbei der Orientierung.

Zur Einstellinformation in der jeweiligen Schaltstufe hat der Bedienknopf eine Blende 6, auf die ein von vorn sichtbares Bild von der Rückseite projiziert werden kann. Hierbei kann bei den jeweiligen Schaltstufen 2-4 eine unterschiedliche Schaltinformation angezeigt werden.

Der Bedienknopf 5 ist sowohl als stufenloser Drehregler als auch als Tendenzschalter, sowie auch als stufiger Schalter ausführbar. Der Bedienknopf beeinflußt in der Stellung 2 die Funktionen Luftstrommenge.

Der Schalter ist durch eine geeignete Form des Bedienknopfes 5, einfach zu bedienen. Bevorzugt weist der Bedienknopf 5 eine längliche Erhöhung auf, die als Griff 7 dient. Hergestellt ist der Bedienschalter 5 bevorzugt aus einem üblichen, in der Kraftfahrzeugtechnik verwendeten Kunststoff, Metall oder Holz. In der gezeigten Ausführung hat der Bedienknopf 5 eine Markierung 12 zur Funktionsanwahl.

Bei der Ausführung des Bedienknopfes 5 als (stufenloser) Schalter, ist der Bedienknopf 5 von einer Anfangsstellung bis zu einer Endstellung, mit der Hand drehbar. In der Anfangsstellung hat der Bedienknopf 5 einen Anfangswert und in der Endstellung hat der Bedienknopf 5 einen Endwert. Der Anfangswert und der Endwert werden der Anfangsstellung und der Endstellung zugeordnet. Die jeweilige Einstellung läßt sich an der Stellung des Griffs 7 und an der Markierung 12 erkennen.

Bei der Ausführung des Bedienknopf 5 als Tendenzschalter hat der Bedienknopf 5 eine Ruhelage. Hierbei wird der Bedienschalter in einen beliebigen Winkel nach links oder rechts aus der Ruhelage gedreht, wobei entweder die erreichte Position die Funktionsauswahl (z. B. die 0 oder die 4) darstellt, oder ein optisches Signal(punkt) entsprechend der Auslenkung des Griffes 7 (nach links oder rechts) über die Funktionsanwahlsymbolik (0 - 4) in der Blende 6 wandert und beim Loslassen des Griffs 7 stoppt. Beim Loslassen des Griffes, wird sich dieser wieder selbständig in die Ruhelage zurück bewegen. Die jeweilige Einstellung (Funktionsauswahl) läßt sich an den Bildern (0 - 4) erkennen, die auf die Blende 6 projiziert werden.

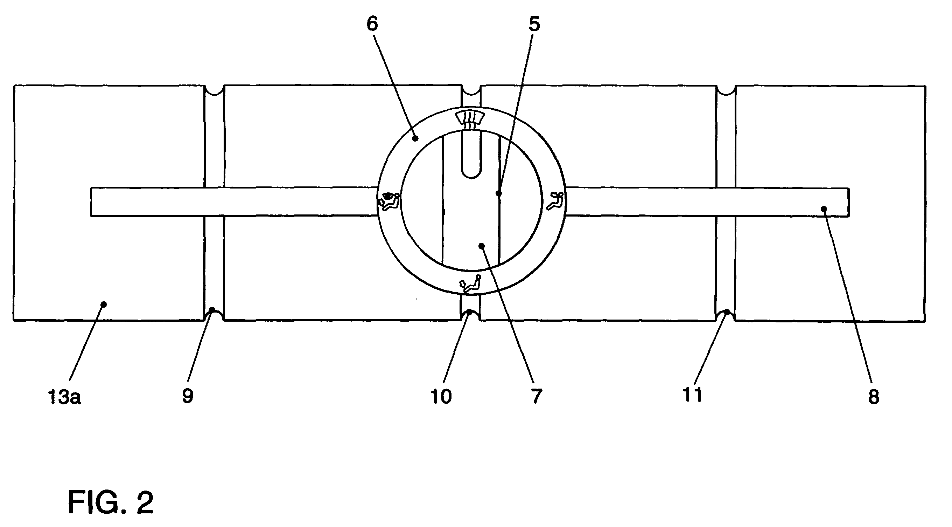

Figur 2 zeigt eine weitere Schaltstufe. Die hier gezeigte Luftverteilungsstufe wird wiederum durch Projektion oder entsprechende Hintergrundbeleuchtung der Blende 6 erreicht.

Die gezeigte Schaltstufe erreicht man durch die Verschiebbarkeit des Bedienknopfes 5 entlang der Schiebebahn 8. Prinzipiell erfolgt die Verstellung wie in Fig. 1 beschrieben, alternativ kann eine Tendenzverschiebung entlang der vertikalen Raststufenbahnen 9,10,11. Bei der Tendenzverschiebung entlang der Raststufenbahnen 9,10,11 ist der Bedienknopf 5 auf und ab beweglich in der jeweiligen Raststufenbahn 9,10,11. Bevorzugt ist die Ausgestaltung in der die Aufwärtsbewegung den eingestellten Wert erhöht und in der Abwärtsbewegung den eingestellten Wert verringert.

Die Tendenzverstellung und Anzeige erfolgt hier analog wie in Fig. 1 beschrieben.

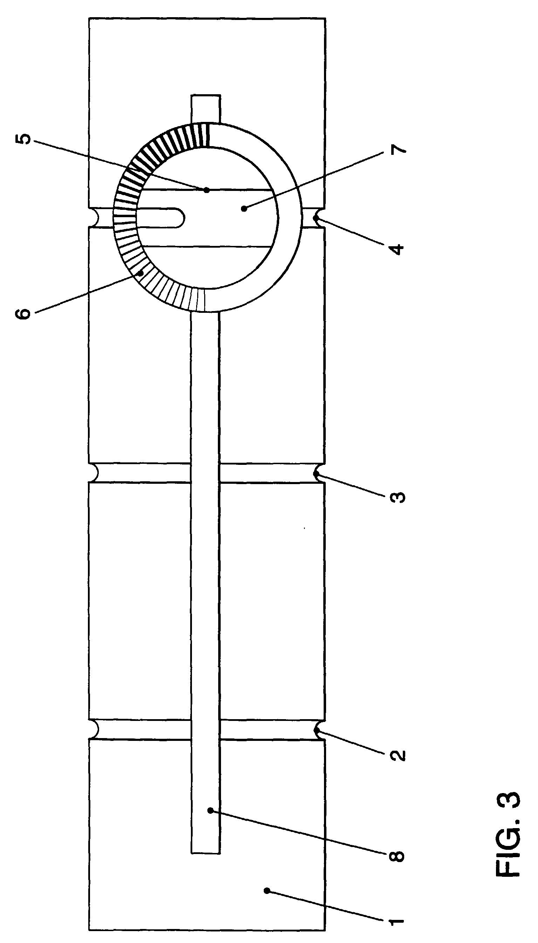

Fig. 3 zeigt die Bedieneinheit der in Fig. 1 beschriebenen Ausgestaltung in der Endstellung auf der Verschiebebahn 8, das heißt in der Schaltstufe 4. Es sind auch Ausgestaltungen möglich, die mehr als drei Schaltstufen aufweisen, In der Schaltstufe 4 hat die Bedieneinheit die Funktion der Temperaturverstellung, wobei wiederum die oben beschriebenen Einstellweisen zum Einsatz kommen können mehrere oder alle Funktionsdarstellungen (Lüftung, Heizung ...) können beim Verschieben des Knopfes (vorteilhaft schwach) beleuchtet bleiben, so daß in jeder Position die volle Information der anderen Einstellungen zur Verfügung steht. Insbesondere kann auch nur der gültig eingestellte Wert angezeigt werden,

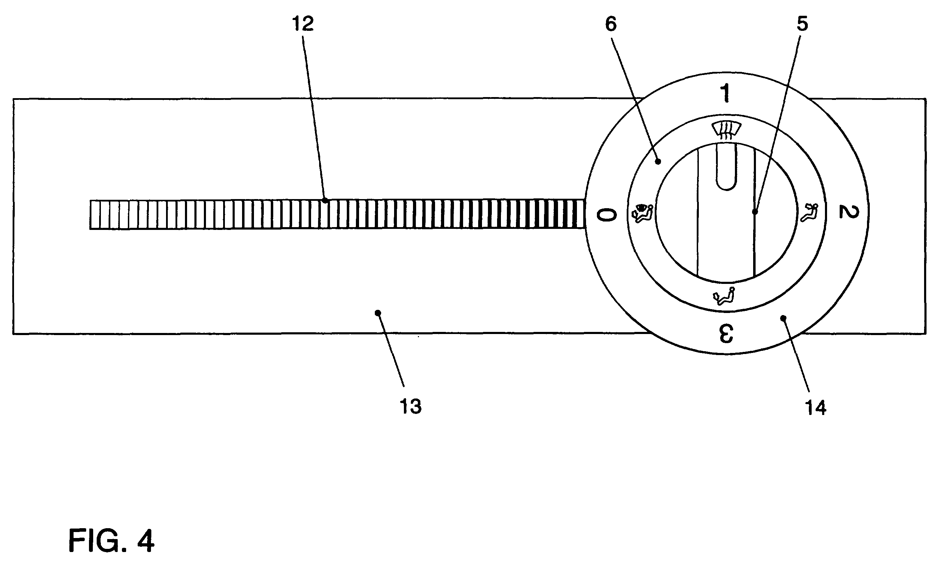

Figur 4 zeigt eine Bedieneinheit mit einer stufenlosen Verschiebebahn 12, auf der der Bedienknopf 5 verschoben wird. Die Verschiebebahn 12 weist eine Farbskala von blau (links) nach rot (rechts) auf, in der Mitte der Verschiebebahn liegt eine Mischung der Farben vor. Der Bedienknopf 5 ist in Fig. 4 in der rechten Endstellung der Verschiebebahn gezeigt, in der die volle Heizfunktion gewählt ist. Durch Verschieben nach links erhält man niedrigere Heizwerte bzw. (bei einer Klimaanlage) eine Zumischung von Kühlluft. Der Bedienknopf 5 ist an seiner Außenseite umgeben von einen Blendenring 6. Dieser Blendenring 6 weist Luftverteilungsymbole auf, die die Luftstromauslasswahl als Piktogramm zeigen. Der Blendenring 6 weist mindestens zwei dieser Piktogramme auf, bevorzugt aber vier Piktogramme. An der Außenseite des Blendenringes 6 befindet sich ein zweites Bedienelement 14, das als Ring geformt ist. Das zweite Bedienelement 14 weist Symbole auf, die die Lüftungsstärke darstellen. Auch das zweite Bedienelement 14 ist als Drehschalter ausgeformt.. Eine bevorzugte Ausgestaltung des Bedienelementes 14 ist die Ausführung als stufenloser Schalter. Auch hier ist eine Tendenzverstellung möglich, wenn auch weniger vorteilhaft als in Fig. 1 - 3. Die Frontplatte 13 ist aus einem in der Kraftfahrzeugtechnik verwendeten Kunststoff, Metall oder Holz gefertigt. Sie ist in einer speziellen Ausgestaltung als Blende ausführbar, auf die ein Bild projiziert wird. Die Frontplatte 13a (Figur 2) ist der Frontplatte 13 (Figur 4) hinsichtlich des Materials gleich. In einer Variante der Frontplatte sind weitere Schaltelemente eingebracht, die weitere Heiz/Lüftung/Klima regelnde Elemente beeinflussen (z. B. Air-condition und Umluft). Diese weiteren Schaltelemente befinden sich an den Enden der Verschiebebahn gegenüberliegend.

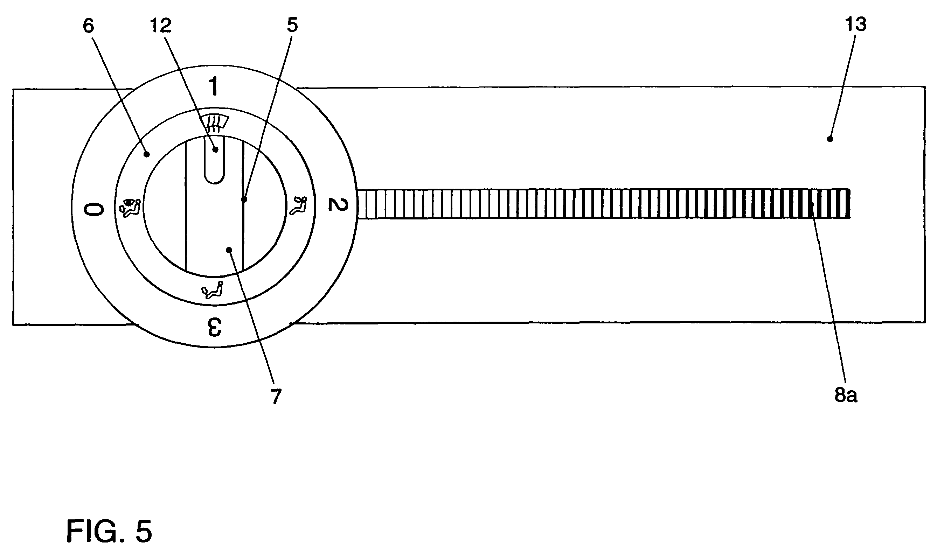

Figur 5 ist eine Ausgestaltung der Fig. 4, bei der der Bedienknopf in der Anfangsstellung der Verschiebebahn 12 ist, d. h. Kaltluft oder Kühlung.

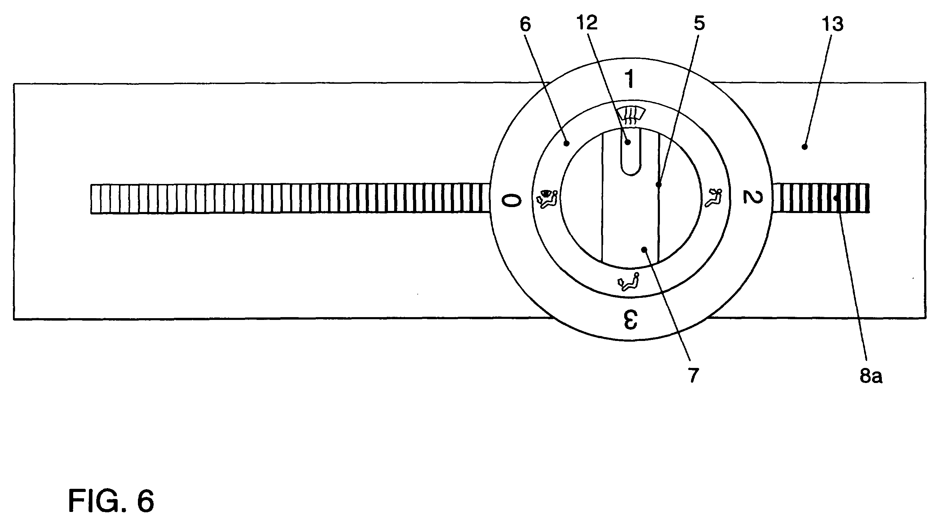

Figur 6 ist eine Ausgestaltung der Fig. 4, bei der der Bedienknopf in einer Zwischenstellung der Verschiebebahn 12 ist, d. h. mittlere Temperierung.

Die Farbskala kann auch durch eine Ziffernskala oder weitere Symbolik ( z. B. variierende Rasterung) ersetzt sein. Prinzipiell kann auf der Verschiebebahn 12 auch eine andere Funktion, z. B. die Lüftungsstärke oder die Luftverteilung liegen, entsprechend ändert sich die Funktionswahl im Bedienknopf (6,14).

### BEZUGSZEICHENLISTE

- 1: Abdeckplatte
- 2: Schaltstufe 1
- 3: Schaltstufe 2
- 4: Schaltstufe 3
- 5: Bedienknopf
- 6: Blende
- 7: Griff
- 8: Verchiebebahn
- 8a: Stufenlose Verchiebebahn
- 9: Erste Rastsufenbahn
- 10: Zweite Raststufenbahn
- 11: Dritte Raststufenbahn
- 12: Markierung
- 13: Frontplatte
- 13a: Frontplatte
- 14: Bedienelement

## Patentansprüche

1. Bedieneinheit zur Heiz/Lüftungsregelung in einem Kraftfahrzeug, **dadurch gekennzeichnet**, daß eine von mehreren Einstellmöglichkeiten der Heiz/Lüftungsregelungsbedieneinheit als erstes Einstellelement (5) in einer Bedienebene ausgebildet ist und die andere als Schiebefunktion (8,12) des ersten Einstellelementes (5) in der Bedienebene ausgebildet ist.

2. Bedieneinheit zur Heiz/Lüftungsregelung in einem Kraftfahrzeug gemäß Anspruch 1, **dadurch gekennzeichnet**, daß die eine der Einstellmöglichkeiten Schaltstufen besitzt.

3. Bedieneinheit zur Heiz/Lüftungsregelung in einem Kraftfahrzeug gemäß Anspruch 1, **dadurch gekennzeichnet**, daß beide der Einstellmäglichkeiten Schaltstufen besitzen.

4. Bedieneinheit zur Heiz/Lüftungsregelung in einem Kraftfahrzeug gemäß einem der vorhergehenden Ansprüche, **dadurch gekennzeichnet**, daß in mindestens einer Schaltstufe (2,3,4) ein optisches Bild mit einer Einstellinformation erzeugt ist.

5. Bedieneinheit zur Heiz/Lüftungsregelung in einem Kraftfahrzeug gemäß Anspruch 4, **dadurch gekennzeichnet**, daß in unterschiedlichen Schaltstufen Bilder mit unterschiedlichen Einstellinformationen angezeigt sind.

6. Bedieneinheit zur Heiz/Lüftungsregelung in einem Kraftfahrzeug gemäß Anspruch 1, 4 oder 5 **dadurch gekennzeichnet**, daß für eine erste und eine zweite Einstellfunktion jeweils mit unterschiedlicher Einstellfunktion optisch anzeigbar sind.

7. Bedieneinheit zur Heiz/Lüftungsregelung in einem Kraftfahrzeug gemäß einem der vorhergehenden Ansprüche, **dadurch gekennzeichnet**, daß mehrere Einstellmöglichkeiten der Heiz/Lüftungsregelungsbedieneinheit jeweils als Drehelement ausgebildet sind.

8. Bedieneinheit zur Heiz/Lüftungsregelung in einem Kraftfahrzeug gemäß einem der vorhergehenden Ansprüche **dadurch gekennzeichnet**, daß das erste Einstellelement mindestens zwei Einstellfunktionen beinhaltet.

9. Bedieneinheit zur Heiz/Lüftungsregelung in einem Kraftfahrzeug gemäß Anspruch 8 **dadurch gekennzeichnet**, daß mindestens zwei der Einstellfunktionen aus der Gruppe Lüftungsstärke, Luftverteilung, Temperatur sind.
